# EUROPEAN PATENT SPECIFICATION

(11) **EP 4 112 283 B1**
(45) Date of publication and mention of the grant of the patent: **22.04.2026**
(21) Application number: 21182907.2
(22) Date of filing: 30.06.2021
(51) Int. Cl.: B29C 70/82, B29C 70/24, B29C 70/68, B29C 65/62, B29C 70/72, D04B 21/16, B64C 1/00

(54) **METHOD FOR MANUFACTURING A LOAD INTRODUCTION FEATURE FOR A FIBER COMPOSITE LAMINATE PART**
VERFAHREN ZUR HERSTELLUNG EINES LASTEINLEITUNGSMERKMALS FÜR EIN FASERVERBUNDLAMINATTEIL
PROCÉDÉ DE FABRICATION D'UNE FONCTION D'INTRODUCTION DE CHARGE POUR UNE PIÈCE STRATIFIÉE COMPOSITE EN FIBRE

(43) Date of publication of application: 04.01.2023
(73) Proprietor: Airbus Operations GmbH, 21129 Hamburg (DE)
(72) Inventor: Daandels, Dort, 21129 Hamburg (DE); Schlipf, Bernhard, 21129 Hamburg (DE)
(74) Representative: KASTEL Patentanwälte PartG mbB

(56) References cited:
- WO-A1-99/19137
- WO-A2-2004/041528

## Description

The invention relates to a method for manufacturing a fiber composite laminate part for an aircraft having an integral load introduction feature for fixing a load carrying structure of the aircraft thereto.

Multispar boxes like the multispar flap are highly integrated parts. Load introduction is typically done via cut outs and metal bracket inserts. Another measure is adding fins to which external brackets are attached. The bracket is usually attached to the load carrying structure by fasteners.

WO 99 / 19137 A1 and WO 2004 / 041 528 A2 both disclose methods for reinforcing a fiber composite in a Z direction.

It is the object of the invention to improve load introduction into a fiber composite laminate part for an aircraft.

The object is achieved by the subject-matter of the independent claims. Preferred embodiments are subject-matter of the dependent claims.

In one aspect, the invention provides a method for manufacturing a fiber composite laminate part for an aircraft having an integral load introduction feature for fixing a load carrying structure of the aircraft thereto, the method comprising:
a) providing a laminate structure that includes a plurality of layers;
b) pulling a longitudinal fiber structure suitable for building a load introduction feature through the laminate structure such that an opening is formed, the opening being defined by a portion of the longitudinal fiber structure and a portion of the laminate structure, so as to obtain a separate load introduction preform and adding the separate load introduction preform to a laminate composite preform, or so as to form the load introduction preform on the laminate composite preform; and
c) curing the laminate composite preform and the load introduction preform into a fiber composite laminate part with the integral load introduction feature formed by the opening, the longitudinal fiber structure, and the laminate structure, such a load carrying structure of an aircraft can be fixed to the load integral structure feature.

Preferably, the laminate structure defines a first laminate side and an opposite second laminate side, and the longitudinal fiber structure is pulled from the first laminate side to the second laminate side and from the second laminate side to the first laminate side, so as to form the opening.

Preferably, in step b) the longitudinal fiber structure is pulled through the laminate structure from the first laminate side to the second laminate side at a first position and pulled from the second laminate side to the first laminate side at a second position that is spaced apart from the first position.

Preferably, the longitudinal fiber structure comprises a first end portion, a second end portion, and an intermediate portion that is arranged between the first and second end portions.

Preferably, in step b) the first end portion is pulled through the laminate structure. Preferably, the first end portion is pulled through the laminate structure at the first and second position, until the first and second end portions protrude from one side of the laminate structure and the intermediate portion is arranged on an opposite side of the laminate structure.

Preferably, the first end portion and/or second end portion is/are circularly split and pressed onto the laminate structure, or wherein the first end portion and/or second end portion is/are bent to be parallel to the layers of the laminate structure.

Preferably, the method comprises a step:
b1) arranging a further laminate structure having a plurality of layers on a side opposite of the opening.

Preferably, steps b) and b1) are executed in alternation. Preferably, in step b) another longitudinal fiber structure is pulled through the laminate structure and the further laminate structure(s).

Preferably, in step b) at least one laminate patch is arranged on the opposite side of the opening, the laminate patch having a height that corresponds to a protruding portion of the longitudinal fiber structure.

Preferably, the laminate patch is arranged adjacent to the longitudinal fiber structure, preferably adjacent to the first end portion and/or second end portion. Preferably, the laminate patch is arranged between the first end portion and the second end portion of the longitudinal fiber structure.

Preferably, step b) is repeated with another longitudinal fiber structure at the same position or adjacent positions.

Preferably, the longitudinal fiber structure is configured as a cord.

Preferably, the cord comprises a center portion and a peripheral portion that surrounds the center portion.

Preferably, a fiber orientation of the center portion is along the longitudinal direction of the longitudinal fiber structure, and a fiber orientation of the peripheral portion differs from the fiber orientation of the center portion.

In another aspect, the invention provides a fiber composite laminate part for an aircraft, wherein the fiber composite laminate is obtainable through a preferred method as previously described.

The idea is to integrate an out of plane lug component into a panel element, that may form a surface of a box-like part. The load introduction is improved for a component/part made from fiber reinforced plastic, such as carbon fiber reinforced plastic (CFRP) or glass fiber reinforced plastic (GFRP). The lug may be orientated in various directions during manufacturing, in particular when compared with the fin approach. As a result, more simplified mounting equipment may be used, which allows for an overall weight reduction. Furthermore, fewer parts are needed as, for example external brackets, are not necessary. Consequently, the complexity of assembly can also be reduced.

A load introduction feature, such as a lug, may be integrated into a panel or box surface, for example. The laminate may be built up from multiple layers. Somewhere between the first and last layer, the load introduction feature is added into the configuration.

Initially, a number of layers is laid-up to form a laminate. Then a cord of fibers is pulled through an entry point on the laminate. One end of the cord remains on one side. The second end of the cord is again pulled through the laminate at a second point. The second points is spaced apart from the first point, i.e., entry point. Both ends of the cord are on the same side of the laminate and are split apart in a circular form and are pressed onto the laminate. The cord may have a 0° fiber orientation in its center and a ±30° to ±60° fiber orientation in a surrounding layer of the center. With this configuration the 0° fiber may be protected from damage and/or inter-fiber-matrix failure by providing shear-load-bearing-capability. Further laminate layers may be added. Depending on the thickness of the split lug ends extra patches may be added between or around the ends. Due to the cord inner fibers having a longer way there may be a ramp feature at the lug inserts.

Depending on strength requirements, a plurality of cords can be pulled through the laminate. This can be done at one location or at locations that are close together or adjacent. It is also possible to begin with some layers for the laminate, then add a first cord, add some more layers, add a next cord, add some more layers, and so on, until the desired strength and/or dimension is achieved.

The tools used for curing can be the same that are used for curing the known multispar boxes with integrated fins.

For the system routing option, the dimensions of the lugs can be less accurate. It is sufficient that the lug size be larger than the required routing diameter. A plate with a hole may be placed on both sides of the lug. The plates may then be clamped together to the fiber lug and kept together using bolts. The holes in the plates are configured to be suitable for the system routing and have the appropriate diameter. The holes of the plates may be configured smaller than the lug opening, so as to allow for a transverse movement (XY-movement) relative to the opening axis. With this the location of the hole is adjustable to fit the system routing.

It is also possible to manufacture a lug or loop preform having a base for mounting the preform to an already preformed part.

Embodiments of the invention are described in more detail with reference to the accompanying drawings.
- Fig. 1: and
- Fig. 2: depict steps of an embodiment of a method according to the invention;
- Fig. 3: depicts a top view of a laminate with a split and pressed cord;
- Fig. 4: depicts an embodiment of a load introduction feature preform;
- Fig. 5: depicts a side view of a mounting arrangement; and
- Fig. 6: depicts a cross-section of the mounting arrangement of Fig. 5.

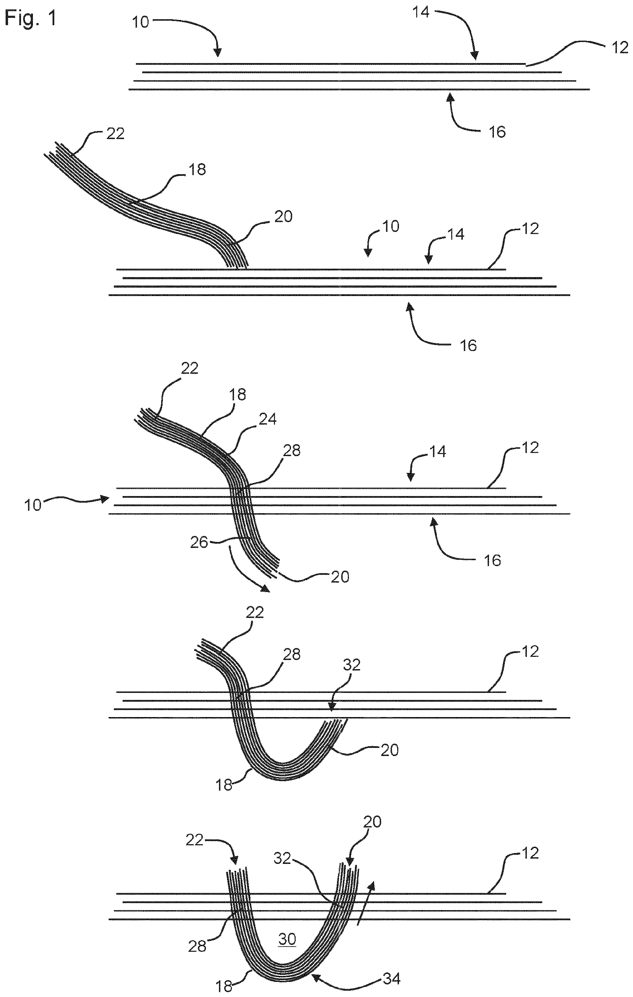

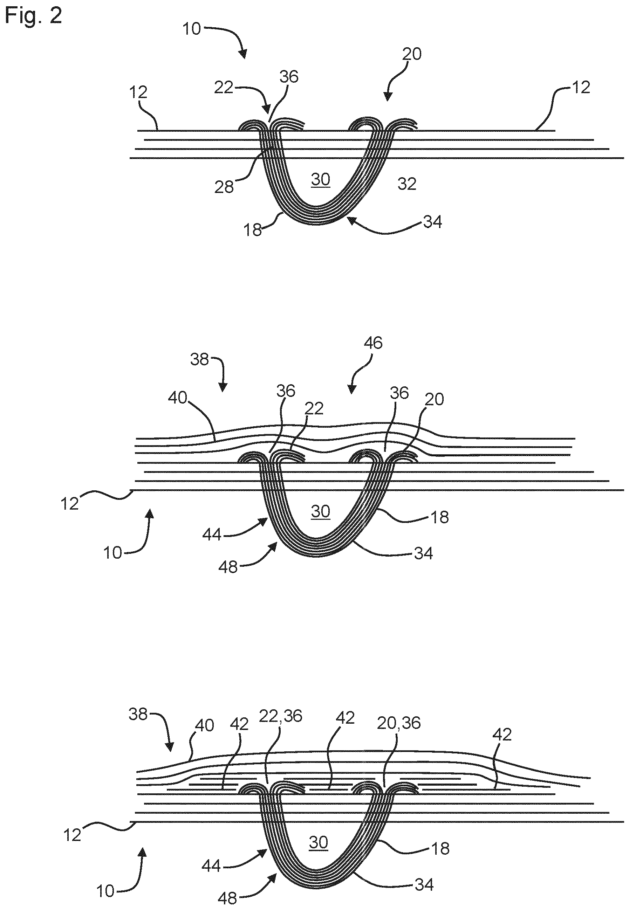

As illustrated in Fig. 1 and Fig. 2, a laminate structure 10 is initially provided. The laminate structure 10 comprises a plurality of layers 12, each layer 12 being formed by a fiber ply or prepreg, for example. The laminate structure 10 has a first laminate side 14 and an opposite second laminate side 16.

Subsequently, a longitudinal fiber structure 18, preferably a cord, is provided. The longitudinal fiber structure 18 has a first end portion 20 and an opposite second end portion 22. The longitudinal fiber structure 18 may include a center portion 24 that has fibers that are aligned parallel to the longitudinal direction of the longitudinal fiber structure. The center portion 24 may be surrounded by a peripheral portion 26 that has fibers that are aligned with an angle from ±30° to ±60° relative to the longitudinal direction.

The first end portion 20 of longitudinal fiber structure 18 is pulled from the first laminate side 14 through the laminate structure 10 to the second laminate side 16 at a first position 28.

The first end portion 20 is then pulled, so as to form a loop-like configuration that defines an opening 30, and the first end portion 20 is brought to a second position 32 that is spaced apart from the first position 28.

The first end portion 20 is pulled from the second laminate side 14 through the laminate structure 10 to the first laminate side 16 at the second position 28. As a result, the first end portion 20 and the second end portion 22 protrude from the laminate structure 10 on the first laminate side 16. The remaining longitudinal fiber structure 18 is designated as an intermediate portion 34 and defines the opening 30 together with a portion of the laminate structure 10.

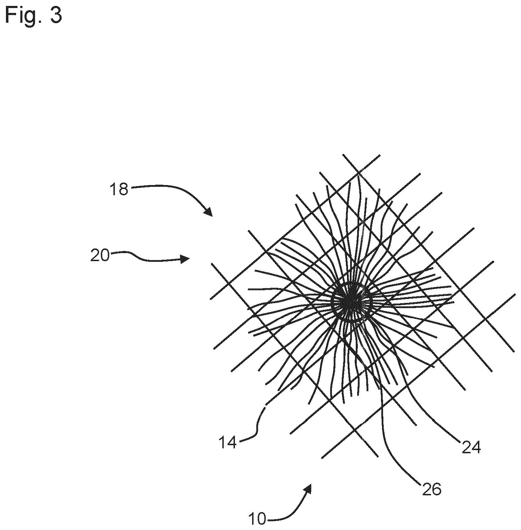

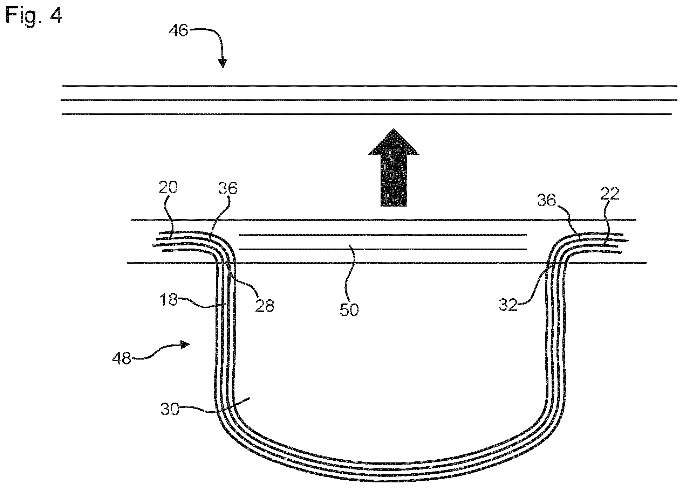

The first end portion 20 and the second end portion 22 are split and the fibers are spread out to form a substantially circular or disk-like shape on the first laminate side 14, as illustrated more closely in Fig. 3. It is also possible that the first and second end portion 20, 22 are bent to be roughly parallel and/or coplanar with the layers 12, as indicated in Fig. 4.

In this state, the first end portion 20 and the second end portion 22 form fixing members 36 that allow a secure fixing of the lug, when in a cured state. The first end portion 20 and the second end portion 22 may be pressed against the laminate structure 10.

A further laminate structure 38 that has a plurality of further layers 40 is arranged on the first laminate side 14, so as to cover the fixing members 36. Alternatively, one or more laminate patches 42 may be arranged between the first and second end portions 20, 22 or in their vicinity.

After these steps, the opening 30 and the longitudinal fiber structure 18 form a load introduction feature preform 44 that may be separate or integrated into a fiber composite laminate preform 46. The load introduction feature preform 44 takes the configuration of a loop or lug preform 48. If the load introduction feature preform 44 is separate, it may be laid onto the fiber composite laminate preform 46 as illustrated in Fig. 4, and the laminate structure 10 and the further laminate structure 38 form a base portion 50 of the load introduction feature preform 44. If the load introduction feature 44 is integrated into the fiber composite laminate preform 46, then the laminate structure 10 and the further laminate structure 38 are also part of the composite laminate preform 46.

In a further step, the load introduction feature preform 44 and the fiber composite laminate preform 46 may be infused with matrix material and cured in a manner known per se. The result is a fiber composite laminate part 52 that has a load introduction feature 54, and they are integrally formed as a single unitary member.

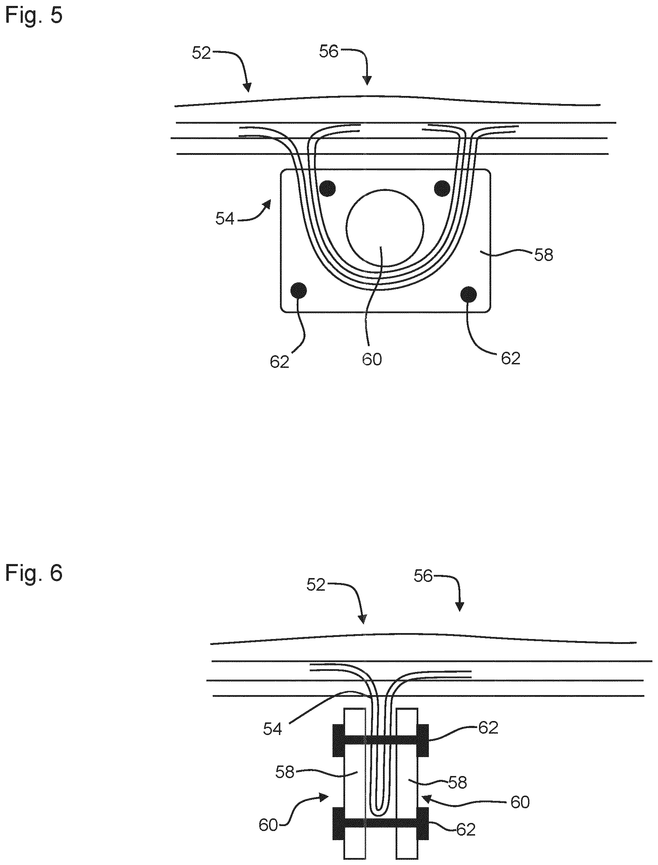

Fig. 5 and Fig. 6 depicts an embodiment of a mounting arrangement 56 for the fiber composite laminate part 52. A plate member 58 is arranged on each side of the load introduction feature 54, respectively. Each plate member 58 has a hole 60 for a fastener. The plate members 58 are fastened to each other using a plurality of bolts 62 such that the plate members 58 are clamped to the load introduction feature 54.

In order to improve load introduction into a fiber composite laminate part (52), the invention proposes to integrate a mounting lug (54) by pulling a cord (18) through an initial laminate structure (10) such that an opening (30) is formed. The ends (20, 22) of the cord (18) are split and pressed onto the laminate structure (10) thereby forming fixing members (36) that are subsequently covered by another laminate structure (38). Laminate patches (42) may be arranged next to the fixing members (36), so as to improve smoothness of the surface. The mounting lug (54) may be clamped between two plates (58) for mounting to another structure.

### List of reference signs:

- 10: laminate structure
- 12: layer
- 14: first laminate side
- 16: second laminate side
- 18: longitudinal fiber structure
- 20: first end portion
- 22: second end portion
- 24: center portion
- 26: peripheral portion
- 28: first position
- 30: opening
- 32: second position
- 34: intermediate portion
- 36: fixing members
- 38: further laminate structure
- 40: further layers
- 42: laminate patch
- 44: load introduction feature preform
- 46: fiber composite laminate preform
- 48: lug preform
- 50: base portion
- 52: fiber composite laminate part
- 54: load introduction feature
- 56: mounting arrangement
- 58: plate member
- 60: hole
- 62: bolt

## Claims

1. A method for manufacturing a fiber composite laminate part (52) for an aircraft having an integral load introduction feature (54) for fixing a load carrying structure of the aircraft thereto, the method comprising:
a) providing a laminate structure (10) that includes a plurality of layers (12);
b) pulling a longitudinal fiber structure (18) suitable for building a load introduction feature (54) through the laminate structure (10) such that an opening (30) is formed, the opening (30) being defined by a portion of the longitudinal fiber structure (18) and a portion of the laminate structure (10), so as to obtain a separate load introduction feature preform (44) and adding the separate load introduction feature preform (44) to a laminate composite preform (46), or so as to form the load introduction feature preform (44) on the laminate composite preform (46); and
c) curing the laminate composite preform (46) and the load introduction feature preform (44) into a fiber composite laminate part (52) with the integral load introduction feature (54) formed by the opening (30), the longitudinal fiber structure (18), and the laminate structure (10), such that a load carrying structure of an aircraft can be fixed to the load introduction feature (54).

2. The method according to claim 1, wherein the laminate structure (10) defines a first laminate side (14) and an opposite second laminate side (16), and the longitudinal fiber structure (18) is pulled from the first laminate side (14) to the second laminate side (16) and from the second laminate side (16) to the first laminate side (14), so as to form the opening (30).

3. The method according to claim 2, wherein in step b) the longitudinal fiber structure (18) is pulled through the laminate structure (10) from the first laminate side (14) to the second laminate side (16) at a first position (28) and pulled from the second laminate side (16) to the first laminate side (14) at a second position (32) that is spaced apart from the first position (28).

4. The method according to any of the preceding claims, wherein the longitudinal fiber structure (18) comprises a first end portion (20), a second end portion (22), and an intermediate portion (34) that is arranged between the first and second end portions (20, 22), wherein in step b) the first end portion (20) is pulled through the laminate structure (10) until the first and second end portion (20, 22) protrude from one side of the laminate structure (10) and the intermediate portion (34) is arranged on an opposite side of the laminate structure (10).

5. The method according to claim 4, wherein the first end portion (20) and/or second end portion (22) is/are circularly split and pressed onto the laminate structure (10), or wherein the first end portion (20) and/or second end portion (22) is/are bent to be parallel to the layers (12) of the laminate structure (10).

6. The method according to any of the preceding claims, comprising a step:
b1) arranging a further laminate structure (38) having a plurality of layers (40) on a side opposite of the opening (30).

7. The method according to claim 6, wherein steps b) and b1) are executed in alternation, and in step b) another longitudinal fiber structure (18) is pulled through the laminate structure (10) and the further laminate structure(s) (38).

8. The method according to any of the preceding claims, wherein in step b) at least one laminate patch (42) is arranged on the opposite side of the opening (30), the laminate patch (42) having a height that corresponds to a protruding portion of the longitudinal fiber structure (18).

9. The method according to any of the preceding claims, wherein step b) is repeated with another longitudinal fiber structure at the same position or adjacent positions.

10. The method according to any of the preceding claims, wherein the longitudinal fiber structure (18) is configured as a cord.

11. The method according to claim 10, wherein the cord comprises a center portion (24) and a peripheral portion (26) that surrounds the center portion (24), wherein a fiber orientation of the center portion (24) is along the longitudinal direction of the longitudinal fiber structure (18), and a fiber orientation of the peripheral portion (26) differs from the fiber orientation of the center portion.

12. The method according to any of the preceding claims, further comprising a step:
c1) arranging a pair of plate members (58) each having a hole (60) such that the opening (30) overlaps the holes (60) in a way that allows insertion of an elongated member, and fixing the plate members (58) to the load introduction feature (54) by clamping.

13. A fiber composite laminate part (52) for an aircraft, wherein the fiber composite laminate part (52) is obtainable through a method according to any of the preceding claims.

## Patentansprüche

1. Verfahren zum Herstellen eines Faserverbundlaminatteils (52) für ein Flugzeug mit einem integralen Lasteinleitungsmerkmal (54) zum Befestigen einer lasttragenden Struktur des Flugzeugs daran, das Verfahren Folgendes umfassend:
a) Bereitstellen einer Laminatstruktur (10), die mehrere Schichten (12) beinhaltet;
b) Ziehen einer Längsfaserstruktur (18), die zum Aufbau eines Lasteinleitungsmerkmals (54) durch die Laminatstruktur (10) geeignet ist, so dass eine Öffnung (30) gebildet wird, wobei die Öffnung (30) durch einen Abschnitt der Längsfaserstruktur (18) und einen Abschnitt der Laminatstruktur (10) definiert wird, um einen separaten Lasteinleitungsmerkmal-Vorformling (44) zu erhalten, und Hinzufügen des separaten Lasteinleitungsmerkmal-Vorformlings (44) zu einem Laminatverbundvorformling (46), oder um so den Lasteinleitungsmerkmal-Vorformling (44) auf dem Laminatverbundvorformling (46) zu bilden; und
c) Härten des Laminatverbundvorformlings (46) und des Lasteinleitungsmerkmal-Vorformlings (44) zu einem Faserverbundlaminatteil (52) mit dem integralen Lasteinleitungsmerkmal (54), das durch die Öffnung (30), die Längsfaserstruktur (18) und die Laminatstruktur (10) gebildet wird, so dass eine lasttragende Struktur eines Flugzeugs an dem Lasteinleitungsmerkmal (54) befestigt werden kann.

2. Verfahren nach Anspruch 1, wobei die Laminatstruktur (10) eine erste Laminatseite (14) und eine gegenüberliegende zweite Laminatseite (16) definiert und die Längsfaserstruktur (18) von der ersten Laminatseite (14) zu der zweiten Laminatseite (16) und von der zweiten Laminatseite (16) zu der ersten Laminatseite (14) gezogen wird, um die Öffnung (30) zu bilden.

3. Verfahren nach Anspruch 2, wobei in Schritt b) die Längsfaserstruktur (18) an einer ersten Position (28) von der ersten Laminatseite (14) zu der zweiten Laminatseite (16) durch die Laminatstruktur (10) gezogen wird und an einer zweiten Position (32), die von der ersten Position (28) beabstandet ist, von der zweiten Laminatseite (16) zu der ersten Laminatseite (14) gezogen wird.

4. Verfahren nach einem der vorhergehenden Ansprüche, wobei die Längsfaserstruktur (18) einen ersten Endabschnitt (20), einen zweiten Endabschnitt (22) und einen Zwischenabschnitt (34) umfasst, der zwischen dem ersten und dem zweiten Endabschnitt (20, 22) angeordnet ist, wobei in Schritt b) der erste Endabschnitt (20) durch die Laminatstruktur (10) gezogen wird, bis der erste und der zweite Endabschnitt (20, 22) aus einer Seite der Laminatstruktur (10) vorstehen und der Zwischenabschnitt (34) auf einer gegenüberliegenden Seite der Laminatstruktur (10) angeordnet ist.

5. Verfahren nach Anspruch 4, wobei der erste Endabschnitt (20) und/oder der zweite Endabschnitt (22) kreisförmig geteilt und auf die Laminatstruktur (10) gepresst wird/werden, oder wobei der erste Endabschnitt (20) und/oder der zweite Endabschnitt (22) so gebogen wird/werden, dass er/sie parallel zu den Schichten (12) der Laminatstruktur (10) ist/sind.

6. Verfahren nach einem der vorhergehenden Ansprüche, einen folgenden Schritt umfassend:
b1) Anordnen einer weiteren Laminatstruktur (38) mit mehreren Schichten (40) auf einer Seite, die der Öffnung (30) gegenüberliegt.

7. Verfahren nach Anspruch 6, wobei die Schritte b) und b1) abwechselnd ausgeführt werden und in Schritt b) eine andere Längsfaserstruktur (18) durch die Laminatstruktur (10) und die weitere(n) Laminatstruktur(en) (38) gezogen wird.

8. Verfahren nach einem der vorhergehenden Ansprüche, wobei in Schritt b) mindestens ein Laminatflicken (42) auf der gegenüberliegenden Seite der Öffnung (30) angeordnet ist, wobei der Laminatflicken (42) eine Höhe aufweist, die einem vorstehenden Abschnitt der Längsfaserstruktur (18) entspricht.

9. Verfahren nach einem der vorhergehenden Ansprüche, wobei Schritt b) mit einer anderen Längsfaserstruktur an der gleichen Position oder an benachbarten Positionen wiederholt wird.

10. Verfahren nach einem der vorhergehenden Ansprüche, wobei die Längsfaserstruktur (18) als eine Schnur eingerichtet ist.

11. Verfahren nach Anspruch 10, wobei die Schnur einen Mittelabschnitt (24) und einen Umfangsabschnitt (26) umfasst, der den Mittelabschnitt (24) umgibt, wobei eine Faserorientierung des Mittelabschnitts (24) entlang der Längsrichtung der Längsfaserstruktur (18) ist und eine Faserorientierung des Umfangsabschnitts (26) von der Faserorientierung des Mittelabschnitts verschieden ist.

12. Verfahren nach einem der vorhergehenden Ansprüche, ferner Folgendes umfassend:
c1) Anordnen eines Paares von Plattenelementen (58), die jeweils ein Loch (60) aufweisen, so dass die Öffnung (30) die Löcher (60) auf eine Weise überlappt, die das Einführen eines länglichen Elements ermöglicht, und Befestigen der Plattenelemente (58) an dem Lasteinleitungsmerkmal (54) durch Klemmen.

13. Faserverbundlaminatteil (52) für ein Flugzeug, wobei das Faserverbundlaminatteil (52) durch ein Verfahren nach einem der vorhergehenden Ansprüche erlangt werden kann.

## Revendications

1. Procédé destiné à fabriquer une pièce stratifiée composite fibreuse (52) pour un aéronef comportant un élément d'introduction de charge intégré (54) pour y fixer une structure porteuse de l'aéronef, le procédé comprenant :
a) l'obtention d'une structure stratifiée (10) qui comporte une pluralité de couches (12) ;
b) le tirage d'une structure fibreuse longitudinale (18) convenant à la construction d'un élément d'introduction de charge (54) à travers la structure stratifiée (10) de telle sorte qu'une ouverture (30) soit formée, l'ouverture (30) étant définie par une partie de la structure fibreuse longitudinale (18) et une partie de la structure stratifiée (10), de manière à obtenir une préforme d'élément d'introduction de charge séparée (44) et ajouter la préforme d'élément d'introduction de charge séparée (44) à une préforme composite stratifiée (46), ou de manière à former la préforme d'élément d'introduction de charge (44) sur la préforme composite stratifiée (46) ; et
c) le durcissement de la préforme composite stratifiée (46) et de la préforme d'élément d'introduction de charge (44) en une pièce stratifiée composite fibreuse (52) avec l'élément d'introduction de charge intégré (54) formé par l'ouverture (30), la structure fibreuse longitudinale (18) et la structure stratifiée (10), de telle sorte qu'une structure porteuse d'un aéronef puisse être fixée à l'élément d'introduction de charge (54).

2. Procédé selon la revendication 1, dans lequel la structure stratifiée (10) définit un premier côté stratifié (14) et un deuxième côté stratifié opposé (16), et la structure fibreuse longitudinale (18) est tirée du premier côté stratifié (14) au deuxième côté stratifié (16) et du deuxième côté stratifié (16) au premier côté stratifié (14), de manière à former l'ouverture (30).

3. Procédé selon la revendication 2 dans lequel, à l'étape b), la structure fibreuse longitudinale (18) est tirée à travers la structure stratifiée (10) du premier côté stratifié (14) au deuxième côté stratifié (16) à une première position (28) et tirée du deuxième côté stratifié (16) au premier côté stratifié (14) à une deuxième position (32) qui est espacée de la première position (28).

4. Procédé selon l'une quelconque des revendications précédentes, la structure fibreuse longitudinale (18) comprenant une première partie d'extrémité (20), une deuxième partie d'extrémité (22), et une partie intermédiaire (34) qui est disposée entre la première et la deuxième partie d'extrémité (20, 22), dans lequel, à l'étape b), la première partie d'extrémité (20) est tirée à travers la structure stratifiée (10) jusqu'à ce que la première et la deuxième partie d'extrémité (20, 22) dépassent d'un côté de la structure stratifiée (10) et la partie intermédiaire (34) soit disposée sur un côté opposé de la structure stratifiée (10).

5. Procédé selon la revendication 4, dans lequel la première partie d'extrémité (20) et/ou la deuxième partie d'extrémité (22) est/sont fendue(s) circulairement et appuyée(s) contre la structure stratifiée (10), ou dans lequel la première partie d'extrémité (20) et/ou la deuxième partie d'extrémité (22) est/sont pliée(s) pour être parallèle(s) aux couches (12) de la structure stratifiée (10).

6. Procédé selon l'une quelconque des revendications précédentes, comprenant l'étape suivante :
b1) mise en place d'une autre structure stratifiée (38) comportant une pluralité de couches (40) sur un côté à l'opposé de l'ouverture (30).

7. Procédé selon la revendication 6, dans lequel les étapes b) et b1) sont exécutées en alternance, et à l'étape b), une autre structure fibreuse longitudinale (18) est tirée à travers la structure stratifiée (10) et la ou les autres structures stratifiées (38).

8. Procédé selon l'une quelconque des revendications précédentes dans lequel, à l'étape b), au moins un morceau stratifié (42) est disposé sur le côté opposé de l'ouverture (30), le morceau stratifié (42) ayant une hauteur qui correspond à une partie en saillie de la structure fibreuse longitudinale (18).

9. Procédé selon l'une quelconque des revendications précédentes, dans lequel l'étape b) est répétée avec une autre structure fibreuse longitudinale à la même position ou à des positions adjacentes.

10. Procédé selon l'une quelconque des revendications précédentes, dans lequel la structure fibreuse longitudinale (18) est configurée comme un cordon.

11. Procédé selon la revendication 10, dans lequel le cordon comprend une partie centrale (24) et une partie périphérique (26) qui entoure la partie centrale (24), une orientation des fibres de la partie centrale (24) suivant la direction longitudinale de la structure fibreuse longitudinale (18), et une orientation des fibres de la partie périphérique (26) étant différente de l'orientation des fibres de la partie centrale.

12. Procédé selon l'une quelconque des revendications précédentes, comprenant en outre l'étape suivante :
c1) mise en place d'une paire d'éléments en forme de plaque (58) comportant chacun un trou (60) de telle sorte que l'ouverture (30) chevauche les trous (60) d'une manière qui permet l'insertion d'un élément allongé, et fixation des éléments en forme de plaque (58) à l'élément d'introduction de charge (54) par serrage.

13. Pièce stratifiée composite fibreuse (52) pour un aéronef, la pièce stratifiée composite fibreuse (52) pouvant être obtenue par un procédé selon l'une quelconque des revendications précédentes.
